# EUROPÄISCHE PATENTANMELDUNG

(11) **EP 0 994 075 A2**
(43) Veröffentlichungstag der Anmeldung: **19.04.2000**
(21) Anmeldenummer: 99119552.0
(22) Anmeldetag: 01.10.1999
(51) Int. Cl.: C02F 3/06, B01D 21/24, B01D 21/34

(54) **Vorrichtung zum dosierten Überleiten von Flüssigkeit von einem Becken in ein anderes Becken**

(30) Priorität: 09.10.1998 DE 19846560
(71) Anmelder: Stähler, Theo, 65589 Hadamar 2 (DE)
(72) Erfinder: Stähler, Theo, 65589 Hadamar 2 (DE)
(74) Vertreter: Quermann, Helmut, Dipl.-Ing.

(57) **Zusammenfassung**

Die Erfindung betrifft eine Vorrichtung zum dosierten Überleiten von Flüssigkeit von einem Becken (2) in ein anderes Becken (1). Sie weist ein rohr- oder trogähnliches Dosierelement (7) auf, das innerhalb des einen Beckens (2) angeordnet ist und in Verbindung mit dem anderen Becken (1) steht. Der innerhalb des einen Beckens (2) angeordnete Abschnitt (9, 15) des Dosierelementes weist einen unteren Ab- und Zulauf (18) sowie einen oberen Überlauf (16) auf. Der dem anderen Becken zugeordnete Abschnitt des Dosierelementes weist einen Zu- und Ablauf (22) auf.

Eine solche Vorrichtung ist baulich einfach gestaltet und gestattet selbstätig ein dosiertes Überleiten von Flüssigkeit zwischen zwei Becken.

Die Vorrichtung findet insbesondere Verwendung beim dosierten Überleiten von Abwasser von einem Biovorbecken (2) in eine Biostufe (1) und umgekehrt.

## Beschreibung

Die Erfindung betrifft eine Vorrichtung zum dosierten Überleiten von Flüssigkeit von einem Becken in ein anderes Becken. Es werden ferner diverse Verwendungen für eine solche Vorrichtung angegeben.

Aus der WO 97/28094 ist ein Verfahren zur aeroben, weitergehenden biologischen Reinigung von Abwässern bekannt. Dort findet ein Biobecken Verwendung, in dem Zellräder angeordnet sind, die sich um eine zentrale Achse im Biobecken drehen. Tauchkörper der in eine Drehbewegung versetzten Zellräder nehmen oberhalb des Abwasserspiegels Luft auf und tragen diese in das Abwasser ein, womit eine innige Belüftung des Abwassers stattfindet. Das Biobecken verfügt über einen Zulauf und einen Ablauf. Über den Ablauf wird behandeltes Wasser einer Nachklärung zugeführt. Die Nachklärung weist einen Ablauf auf, der zur Rückführung der Biomasse aus der Nachklärung in das Biobecken über den Zufluß mit dem Biobecken in Verbindung steht. Über einen Ablauf kann überschüssiger Schlamm aus dem Rücklauf zwischen Nachklärung und Biobecken entfernt werden. Behandeltes geklärtes Wasser kann dem Nachklärungsbecken über einen weiteren Ablauf entzogen werden.

Eine Biostufe in einem Abwasserreinigungsprozeß wird nicht kontinuierlich mit Abwasser beaufschlagt. Entsprechend der sogenannten Tagesganglinie fällt einmal mehr, einmal weniger Abwasser an. Die Biostufe ist nach einem mittleren Abwasseranfall ausgelegt. Es ist somit sicherzustellen, daß nach Möglichkeit eine konstante Abwassermenge pro Zeiteinheit dem Biobecken zufließt. Um dies zu erreichen, werden in aller Regel Dosierpumpen verwendet. Der damit einhergehende bauliche Aufwand sowie Steuerungsaufwand ist erheblich.

In der DE 43 27 235 A1 ist eine Überlaufeinrichtung für benachbarte Kammern einer Kläranlage beschrieben, die einen konstanten Volumenstrom unabhängig vom Differenzbetrag benachbarter Wasserstände gewährleistet. Das gelingt dadurch, daß sich der Einlauf der Überlaufeinrichtung dem jeweiligen Wasserstand anpaßt, indem ein Schwimmkörper den Überlaufeingang der Wasseroberfläche nachführt. Dabei läßt eine Faltmembrane die Auf- und Abbewegung des Ablaufrohres zu.

Es ist Aufgabe vorliegender Erfindung, eine Vorrichtung zum dosierten Überleiten von Flüssigkeit von einem Becken in ein anderes Becken anzugeben, die mechanisch einfach ausgebildet ist, automatisch funktioniert und somit keinen Steuerungsaufwand bedingt.

Gelöst wird die Aufgabe durch eine Vorrichtung zum dosierten Überleiten von Flüssigkeit von einem Becken in ein anderes Becken, die gekennzeichnet ist durch ein rohr- oder trogähnliches Dosierelement, das innerhalb des einen Beckens angeordnet ist und in Verbindung mit dem anderen Becken steht, wobei der innerhalb des einen Beckens angeordnete Abschnitt des Dosierelementes einen unteren Ab- und Zulauf sowie einen oberen Überlauf aufweist, sowie der dem anderen Becken zugeordnete Abschnitt des Dosierelementes einen Zu- und Ablauf aufweist.

Die Verwendung der erfindungsgemäßen Vorrichtung ist nicht darauf beschränkt, Abwasser dosiert von einem Biovorbecken in eine Biostufe bzw. von der Biostufe in das Biovorbecken überzuleiten. Mit der Vorrichtung können grundsätzlich alle dosierten Überleitungsvorgänge betreffend Flüssigkeiten von einem Becken in ein anderes Becken beherrscht werden. Vorzugsweise Verwendungen der erfindungsgemäßen Vorrichtungen bestehen neben der vorgenannten im Mengenausgleich von Abwasser zwischen Becken entsprechend einer Tagesganglinie, ferner im dosierten Überleiten von Abwasser bei dessen Klärung von einem Vorbecken in ein Klärbecken. Die Verwendung der Vorrichtung kann sich auch auf das dosierte Füllen bzw. Leeren eines Speicherbeckens, insbesondere Regenrückhaltebeckens, beziehen. Anwendungsgebiet der vorliegenden Erfindung kann im weitesten Sinne die Siedlungswasserwirtschaft sein, ferner die Reinigung von Abwässern im Zusammenhang mit der Tierzucht, insbesondere Fischzucht, allgemein das dosierte Überleiten von Wasser bzw. Abwasser.

Die erfindungsgemäße Vorrichtung ermöglicht auf baulich besonders einfache Art und Weise das dosierte Überleiten von Flüssigkeit von dem einen Becken in das andere Becken. Steigt die Flüssigkeit im einen Becken, bei dem es sich insbesondere um ein Speicherbecken handelt, so gelangt bei einem definierten Flüssigkeitsniveau die Flüssigkeit durch den unteren Ab- und Zulauf, der in diesem Fall die Funktion eines Zulaufs aufweist, in das Dosierelement. Die Flüssigkeit strömt damit von unten in das Dosierelement ein. Die Größe der Öffnung des Zulaufs stellt ein Maß für die pro Zeiteinheit in das Dosierelement gelangende Flüssigkeitsmenge dar, womit die zulaufende Flüssigkeitsmenge dosiert wird. Da das Dosierelement einen weiter oben liegenden Überlauf aufweist, gelangt die Flüssigkeit über den dem anderen Becken zugeordneten Abschnitt des Dosierelementes, der den Zu- und Ablauf aufweist, in das andere Becken. Bezogen auf das Dosierelement besitzt in diesem Fall der dem anderen Becken zugeordnete Zu- und Ablauf die Funktion eines Ablaufes. Die Anordnung des oberen Überlaufes bezüglich des unteren Ab- und Zulaufs, der innerhalb des einen Beckens angeordnet ist, gibt im Zusammenhang mit der Größe dieses einen Beckens die Speicherfähigkeit vor. Liegt der obere Überlauf etwa 400 mm oberhalb des unteren Ab- und Zulaufes, gelangt die Flüssigkeit erst dann, abgesehen von der Strömungsverbindung über den unteren Zulauf, über den oberen Überlauf in das Dosierelement und damit in das andere Becken, wenn diese Differenzhöhe von 400 mm durch den Aufstau der Flüssigkeit im einen Behältnis überschritten wird. Der obere Überlauf soll damit verhindern, daß das erste Becken nicht überläuft.

Sinkt der Flüssigkeitsstand im ersten Becken wieder unter das Niveau des oberen Überlaufs ab, gelangt Flüssigkeit nur noch über den unteren Zulauf in das Dosierelement. Sinkt die Flüssigkeit im ersten Becken weiter ab, unter das Niveau des unteren Ab- und Zulaufs, gelangt über das erste Becken keine Flüssigkeit mehr in das Dosierelement. Statt dessen kann die Flüssigkeit nun vom anderen Becken in das Dosierelement über dessen im anderen Becken zugeordneten Zu- und Ablauf einströmen, der damit die Funktion eines Zulaufs für das Dosierelement aufweist. Vom Dosierelement gelangt die Flüssigkeit durch den unteren Ab- und Zulauf, der nunmehr die Funktion eines Ablaufs aufweist, in das erste Becken. Der untere Ab- und Zulauf des innerhalb des einen Becken angeordneten Abschnittes des Dosierelementes gewährleistet somit das dosierte Überleiten der Flüssigkeit zwischen dem Becken.

Gemäß einer besonderen Ausführungsform der Erfindung ist das rohr- oder trogähnhiche Dosierelement im wesentlichen horizontal angeordnet. Die von dem einen Becken in das Dosierelement strömende Flüssigkeit gelangt damit über den im wesentlichen horizontal angeordneten Abschnitt des Dosierelementes in das andere Becken und umgekehrt.

Eine bauliche besonders einfache Gestaltung des Dosierelementes ergibt sich, wenn dieses als Rohr ausgebildet ist, dessen eines Ende eine erhöht angeordnete Überlauföffnung, sowie dessen unterer Bereich mit einer Ab- und Zulauföffnung versehen ist, ferner das andere Ende des Rohres in das andere Becken mündet. Das Dosierelement stellt sich damit als im Bereich des einen Endes hochgebogenes Rohr dar, dessen anderes Ende eine Wandung zwischen den beiden Becken außen abgedichtet durchsetzt. Zweckmäßig ist die Überlauföffnung im wesentlichen horizontal angeordnet. Eine besonders präzise Dosierung der Flüssigkeit läßt sich erzielen, wenn das Rohr im Bereich der Überlauföffnung einen Einschnitt aufweist. Dieser stellt beim Einstau von Flüssigkeit einen stetig zunehmenden Durchtrittsquerschnitt für die in das Dosierelement eintretende Flüssigkeit dar, bis bei einem großen Einstau schließlich die Flüssigkeit auch durch den kreisförmigen Öffnungsbereich der Überlauföffnung in das Dosierelement einfließt.

Gemäß einer besonderen Ausführungsform der Erfindung ist vorgesehen, daß das Dosierelement unten ein weiteres Rohr aufweist, das mit dem anderen rohrförmigen bzw. dem trogförmigen Bereich des Dosierelementes verbunden ist und nach unten ragt, wobei das weitere Rohr den unteren Zu- und Ablauf darstellt. Sollte sich das weitere Rohr beim Zulaufen von Flüssigkeit verlegen, beispielsweise durch in der Flüssigkeit befindliche Blätter, steigt die Füssigkeit im Vorbecken auf Höhe des Überlaufes, womit über diesen die Flüssigkeit in das Dosierelement gelangt, und von dort ein Teil der Flüssigkeit in das weitere Rohr gelangt und die Verstopfung behebt.

Eine zweckmäßige Gestaltung sieht vor, daß das rohr- oder druckähnliche Dosierelement zumindest mit einem unteren trogförmigen Bereich in das andere Becken ragt. Die Flüssigkeit gelangt damit nicht unmittelbar auf Höhe des Niveaus des unteren Rohrbereiches aus dem Dosierelement in das andere Becken bzw. vom anderen Becken in das Dosierelement, sondern wird geringfügig mittels des unteren trogförmigen Bereiches im Dosierelement aufgestaut. Selbstverständlich liegt die obere Kante dieses unteren trogförmigen Bereiches unterhalb des oberen Überlaufs. Der durch den trogförmigen Bereich gebildete Zu- und Ablauf des anderen Beckens ist zweckmäßig in seiner Zu- und Ablaufhöhe einstellbar. Dies ist insbesondere bei der Ausbildung des anderen Beckens als Biostufe wesentlich, da hierdurch das Zu- und Abflußniveau der Biostufe verändert werden kann.

Im besonderen Anwendungsfall der Abwasserreinigung ist die erfindungsgemäße Gestaltung der Vorrichtung zum dosierten Überleiten des Abwassers zwischen dem Biobecken und dem Vorbecken von besonderer Bedeutung. Es wird die im Biobecken befindliche Flüssigkeit belüftet, was beispielsweise durch Oberflächenbelüftung, Druckluftbelüftung oder mechanisch durch das Drehen der eingangs beschriebenen Zellräder mit Tauchkörpern in der Flüssigkeit bewerkstelligt wird. Hierbei entstehen Turbulenzen an der Oberfläche des Abwassers, so daß der Flüssigkeitsspiegel schwankt, beispielsweise zwischen 30 und 40 mm. Dies reicht aus, das mit Biomasse durchsetzte Wasser über das Dosierelement und dessen unteren Ablauf in das Vorbecken zu leiten, wo die Biomasse als Schlamm abgelagert wird.

Weitere Merkmale der Erfindung sind in den Patentansprüchen, der Beschreibung der Figur sowie in der Figur dargestellt, wobei bemerkt wird, daß alle Merkmale sowie Kombinationen von Merkmalen erfindungswesentlich sind.

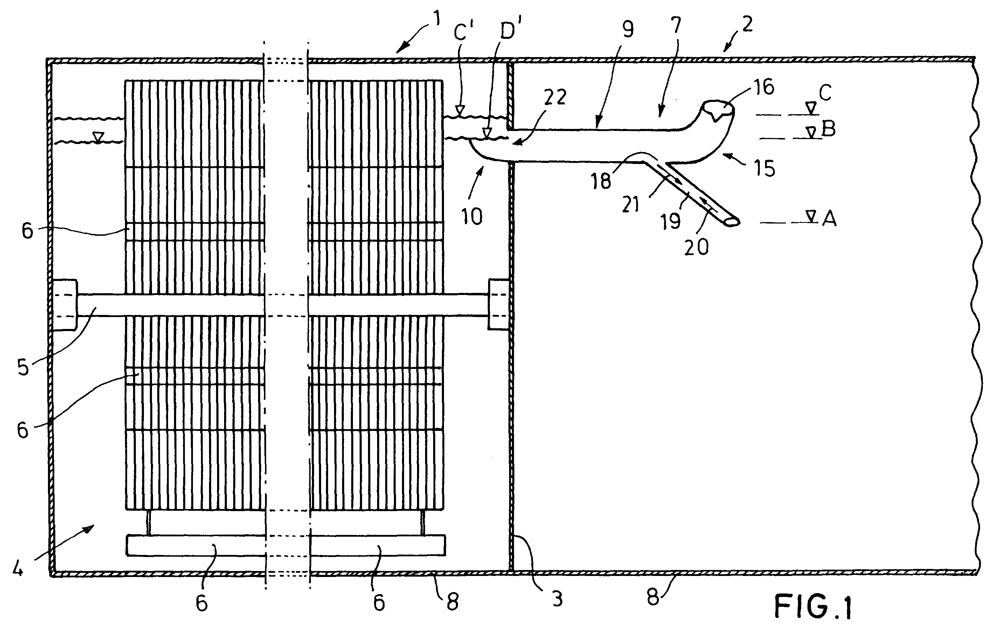

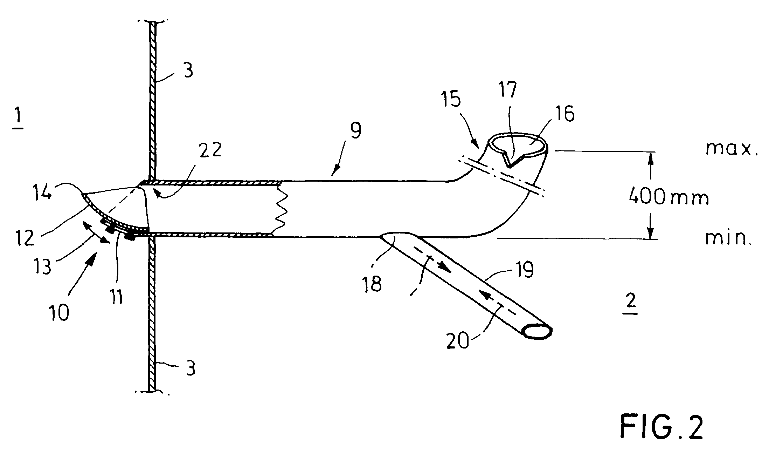

In den Figuren ist die Erfindung anhand eines Ausführungsbeispieles für den Anwendungsbereich des dosierten Überleitens von Abwasser von einem Vorbecken zu einem Biobecken und umgekehrt dargestellt, ohne hierauf beschränkt zu sein. Die Figur 1 zeigt in schematischer Darstellung einen Längsmittelschnitt durch ein Biobecken und ein Vorbecken, das mit der erfindungsgemäßen Dosiervorrichtung ausgestattet ist, Figur 2 zeigt eine vergrößerte Darstellung des erfindungsgemäßen Dosierelementes.

Ein Biobecken 1 und ein Biovorbecken 2 sind unmittelbar nebeneinander angeordnet und weisen eine gemeinsame Beckenwandung 3 auf. Im Biobecken 1 ist ein Zellrad 4 um eine zentrale, horizontale Achse mittels eines nicht dargestellten motorischen Antriebes in Rotation um diese Achse versetzbar. Das Zellrad 4 weist außen zusätzlich sternförmig zur Achse 5 angeordnete Rohrkörper 6 auf. Das Zellrad 4 und die Rohrkörper 6 sind aus dem Stand der Technik bekannt. Die gestrichelten Linien betreffend das Biobecken, das Zellrad 4 und die Rohrkörper 6 verdeutlichen, daß das Biobecken 1, bezogen auf die Längserstrekung der Achse 5, verkürzt dargestellt ist. Das Biobecken 1 kann jede geeignete Länge aufweisen, entsprechend ist die Breite des Zellrades 4 und die Länge der Rohrkörper größer zu bemessen, bzw. es sind mehrere Einheiten von Zellrad/Rohrkörper vorzusehen.

Bezüglich des Biovorbeckens 2 ist nur dessen an das Biobecken 1 angrenzender Bereich gezeigt, um zu veranschaulichen, daß die Größe des Biovorbeckens 2 entsprechend dem erforderlichen Speichervolumen beliebig sein kann. Es kann sich bei dem Biovorbecken 2 um ein sehr großes Becken handeln, so daß bei einem Einstau von Flüssigkeit, insbesondere Abwasser, im Biovorbecken 2 nur eine geringfügige Änderung des Flüssigkeitsniveaus zu verzeichnen ist.

In der gemeinsamen Wandung 3 von Biobecken 1 und Biovorbecken 2 ist ein rohrförmiges Dosierelement 7 gelagert. Es besitzt einen geraden, horizontal angeordneten und parallel zum Boden 8 der beiden Becken 1 und 2 verlaufenden Rohrabschnitt 9, der außen abgedichtet in einer kreisförmigen Öffnung 22 in der Beckenwandung gehalten ist. An den unteren Bereich des Rohrabschnittes 9 anschließend weist das Dosierelement 7 einen trogförmigen Abschnitt 10 auf, der in das Biobecken 1 ragt. Der trogförmige Abschnitt 10 besteht aus einem gekrümmten Abschnitt 11, der fest mit dem Rohrabschnitt 9 verbunden ist, sowie einem im gekrümmten Abschnitt 11 verschieblich gelagerten weiteren gekrümmten Abschnitt 12. Der Doppelpfeil 13 verdeutlicht die Verstellrichtungen des beweglichen gekrümmten Abschnittes 12. Die Beweglichkeit der beiden Abschnitte 11 und 12 zueinander gestattet es, das Überlaufniveau des trogförmigen Abschnittes 10 zu ändern, das durch das veränderliche Niveau der oberen Kante 14 des beweglichen gekrümmten Abschnittes 12 vorgegeben wird.

Das dem trogförmgien Abschnitt 10 abgewandte Ende des Dosierelementes 7 ist als gekrümmter Rohrabschnitt 15 ausgebildet, der durch Biegen des wesentlicher Bestandteil des Dosierelementes 7 bildenden Rohres nach oben erzeugt wird. Die Rohröffnung 16 des gekrümmten Rohrabschnittes 15 hat die Funktion einer Überlauföffnung. Diese ist mit einem Einschnitt 17 zum dosierten Überlaufen der Flüssigkeit versehen.

Schließlich ist ein weiteres Rohr 19 unten mit dem Rohrabschnitt 9 verbunden, das, ausgehend vom Rohrabschnitt 9, schräg nach unten von der Beckenwandung 3 weggerichtet ist. Über eine Öffnung 18 im Rohrabschnitt 9 kann Flüssigkeit vom Rohr 19 in den Rohrabschnitt 9 gelangen und umgekehrt.

Der Durchmesser des Rohres 19, das die Funktion eines Dosierrohres aufweist, beträgt beispielsweise 50 mm, der Durchmesser des Rohrabschnittes 9 und des gekrümmten Rohrabschnittes 15 ungefähr 100 mm. Der Abstand zwischen der Unterkante des Rohrabschnittes 9 und der Rohröffnung 16 beträgt beispielsweise, was in der Zeichnung unmaßstäblich wiedergegeben ist, 400 mm. Die Tiefe des Einschnittes 10 beträgt beispielsweise 20 mm. Die Kante 14 befindet sich auf einem Niveau zwischen dem unteren Wandungsbereich des Rohrabschnittes 9 und der Rohröffnung, vorzugsweise auf halber Höhe.

Befüllt wird das Biobecken 1 über das Biovorbecken 2. Staut sich das Abwasser im Biobecken 1 über das Niveau A, strömt Abwasser durch das Rohr 19 in Richtung des Pfeiles 20 in das rohrförmige Dosierelement 7 ein. Ist das Abwasser auf das Niveau B im Biovorbecken 2 angestiegen, tritt es über die Nase des rohrförmigen Dosierelementes 7, vorliegend die Oberkante 14 des trogförmigen Abschnittes 10, in das Biobecken 1 über, womit sich dieses füllt. Sollte der Einstau des Abwassers im Biovorbecken 2 in Ausnahmefällen so hoch sein, daß das Niveau der Rohröffnung 16 bzw. des Einschnitts 17 erreicht wird, strömt das Abwasser zusätzlich durch das dickere Rohr in das Biobecken 1. Das entsprechende Abwasserniveau im Biobecken 1 ist mit C' bezeichnet.

Sinkt das Abwasserniveau im Biovorbecken 2 oder das Niveau C ab, wird das Abwasser aus dem Biobecken 1 ausschließlich durch den Rohrabschnitt 9 und das Rohr 19 in Richtung des Pfeiles 21 aus dem Biobecken 1 abgeleitet. Stellt sich im Biobecken unter der Annahme des nicht rotierenden Zellrades 4 und damit beruhigten Abwasserniveaus der Niveauspiegel D' ein, würde kein Abwasser vom Biobecken 1 in das Biovorbecken 2 rückgeführt. Aufgrund des Umstandes, daß beim Drehen des Zellrades 4 Turbulenzen im Abwasser erzeugt werden, entstehen Wasserspiegeldifferenzen zwischen dem Niveau D' und in etwa dem Niveau C' im Biobecken 1, die beispielsweise 30 bis 40 mm betragen. Diese Differenzen bewirken, daß das Abwasser aus dem Biobecken 1 in das rohrförmige Dosierelement 7 überschwappt. Das mit Biomasse vermischte Wasser läuft damit durch das kleine Rohr 19 in das Biovorbecken 2 und wird dort als Schlamm abgelagert.

## Patentansprüche

1. Vorrichtung zum dosierten Überleiten von Flüssigkeit von einem Becken in ein anderes Becken, **gekennzeichnet** durch ein rohr- oder trogähnliches Dosierelement (7), das innerhalb des einen Beckens (2) angeordnet ist und in Verbindung mit dem anderen Becken (1) steht, wobei der innerhalb des einen Beckens (2) angeordnete Abschnitt (9, 15) des Dosierelementes (7) einen unteren Ab- und Zulauf (18) sowie einen oberen Überlauf (16) aufweist sowie der dem anderen Becken (1) zugeordnete Abschnitt des Dosierelementes (7) einen Zu- und Ablauf (22) aufweist.

2. Vorrichtung nach Anspruch 1, **dadurch gekennzeichnet**, daß das rohr- oder trogförmige Dosierelement (7) im wesentlichen horizontal angeordnet ist.

3. Vorrichtung nach Anspruch 1 oder 2, **dadurch gekennzeichnet**, daß das Dosierelement (7) als Rohr (9, 15) ausgebildet ist, dessen eines Ende eine erhöht angeordnete Überlauföffnung (16), sowie dessen unterer Bereich mit einer Ab- und Zulauföffnung (18) versehen ist, sowie das andere Ende des Rohres (9, 15) in das andere Becken (1) mündet.

4. Vorrichtung nach Anspruch 3, **dadurch gekennzeichnet**, daß das Rohr (9, 15) einen nach oben gebogenen Abschnitt (15) aufweist, und die diesem Abschnitt (15) zugeordnete Überlauföffnung (16) im wesentlichen horizontal angeordnet ist.

5. Vorrichtung nach Anspruch 4, **dadurch gekennzeichnet**, daß das Rohr (9, 15) im Bereich der Überlauföffnung (16) einen Einschnitt (17) zum dosierten Überlaufen der Flüssigkeit aufweist.

6. Vorrichtung nach einem der Ansprüche 1 bis 5, **dadurch gekennzeichnet**, daß das Dosierelement (7) unten ein weiteres Rohr (19) aufweist, das mit dem anderen rohrförmigen bzw. dem trogförmigen Bereich (9) des Dosierelementes (7) verbunden ist und nach unten ragt, wobei das weitere Rohr den unteren Zu- und Ablauf darstellt.

7. Vorrichtung nach einem der Ansprüche 1 bis 6, **dadurch gekennzeichnet**, daß das rohr- oder trogähnliche Dosierelement (7) mit einem unteren trogförmigen Bereich (10) in das andere Becken (1) ragt.

8. Vorrichtung nach Anspruch 7, **dadurch gekennzeichnet**, daß der durch den trogförmigen Bereich (10) gebildete Zu- und Ablauf des anderen Beckens (1) in seiner Zu- und Ablaufhöhe einstellbar ist.

9. Vorrichtung nach Anspruch 8, **dadurch gekennzeichnet**, daß eine Nase (11, 12) des trogförmigen Bereiches (10) in der Höhe einstellbar ist.

10. Verwendung einer Vorrichtung gemäß einem der Ansprüche 1 bis 9 zum Mengenausgleich des Abwassers zwischen Becken (1, 2).

11. Verwendung einer Vorrichtung gemäß einem der Ansprüche 1 bis 9 zum dosierten Überleiten von Abwasser bei dessen Klärung von einem Vorbecken (2) in ein Klärbecken (1) oder von dem Klärbecken (1) in das Vorbecken (2).

12. Verwendung einer Vorrichtung gemäß einem der Ansprüche 1 bis 9 zum dosierten Überleiten von Abwasser von einem Biovorbecken (2) in eine Biostufe (1) oder von der Biostufe (1) in das Biovorbecken (2).

13. Verwendung einer Vorrichtung gemäß einem der Ansprüche 1 bis 9 zum dosierten Füllen eines Speicherbekens.

14. Verwendung einer Vorrichtung gemäß Anspruch 13 zum dosierten Füllen eines Regenrückhaltebeckens.
